(19) Europäisches Patentamt
European Patent Office
Office européen des brevets

(11) EP 0 678 109 B1

(12) EUROPÄISCHE PATENTSCHRIFT

(45) Veröffentlichungstag und Bekanntmachung des Hinweises auf die Patenterteilung:
**15.07.1998 Patentblatt 1998/29**

(21) Anmeldenummer: **94904621.3**

(22) Anmeldetag: **04.01.1994**

(51) Int Cl.[6]: **C08J 3/12**
// C08L71:00, C08L81:06

(86) Internationale Anmeldenummer:
**PCT/EP94/00007**

(87) Internationale Veröffentlichungsnummer:
**WO 94/15999 (21.07.1994 Gazette 1994/17)**

(54) **MIKROPULVER**

MICROPOWDER

MICROPOUDRE

(84) Benannte Vertragsstaaten:
**AT BE CH DE DK ES FR GB GR IE IT LI LU NL PT SE**

(30) Priorität: **08.01.1993 DE 4300326**
**21.01.1993 DE 4301543**

(43) Veröffentlichungstag der Anmeldung:
**25.10.1995 Patentblatt 1995/43**

(73) Patentinhaber: **BASF Aktiengesellschaft**
**67063 Ludwigshafen (DE)**

(72) Erfinder:
- **SCHOENHERR, Michael**
**D-67227 Frankenthal (DE)**
- **AHLERS, Juergen**
**D-68649 Gross-Rohrheim (DE)**
- **BUCHERT, Hermann**
**D-67098 Bad Duerkheim (DE)**

(56) Entgegenhaltungen:
**DE-A- 2 403 660**
**GB-A- 2 000 720**
**GB-A- 2 151 202**

- **A.H. LEFEBVRE 'Atomization and Sprays', 1989, HEMISPHERE PUBLISHING CORPORATION, NEW YORK**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 678 109 B1

Printed by Jouve, 75001 PARIS (FR)

## Beschreibung

Die vorliegende Erfindung betrifft Mikropulver mit einem relativen Spanfaktor, bestimmt wie unten beschrieben, von nicht mehr als 2,5 aus sphärischen Teilchen einer im wesentlichen glatten Oberflächenstruktur, die als wesentliche Komponente Polyarylenethersulfone oder -ketone enthalten und die durch Sprühtrocknung derer Lösungen unter Verwendung einer Mehrstoffdüse erhältlich sind. Darüber hinaus betrifft die Erfindung ein Verfahren zur Herstellung dieser Mikropulver und deren Verwendung. Ferner betrifft die Erfindung wäßrige Dispersionen, die die Mikropulver enthalten sowie daraus hergestellte Beschichtungen.

Mikropulver auf der Basis von Polyarylenethersulfonen oder -ketonen sind an sich bekannt und werden beispielsweise als Haftvermittler zwischen metallischen Oberflächen und Polytetrafluorethylen eingesetzt, etwa um Beschichtungen mit haftabweisender Wirkung und gutem Gleitverhalten herzustellen (siehe beispielsweise GB 1 426 342). Derartige bekannte Mikropulver werden dadurch erhalten, daß die Substrate durch Abkühlen versprödet und anschließend gemahlen werden (siehe z.B. EP-A2-377 170). Aus der WO 91/00876 geht hervor, daß Mikropulver aus Polyarylenethersulfonen auch dadurch zugänglich sind, daß die Polyarylenethersulfone mit einer Flüssigkeit zu einer Paste verarbeitet werden, diese unter starkem Rühren im Wasser emulgiert und die Emulsion getrocknet wird. Die durch Mahlen erhältlichen Mikropulver haben stets unregelmäßige kantige Oberflächen. Dies wirkt sich beispielsweise nachteilig auf die Fließfähigkeit und die Schüttdichte der Pulver sowie das Verhalten des Pulvers in der Wirbelschicht aus. Darüber hinaus können Oberflächen nicht, wie es für viele Anwendungszwecke erforderlich ist, sehr gleichmäßig beschichtet werden. Die unter Einwirken eines Schergefälles aus einer Emulsion hergestellten Mikropulver enthalten ovale bis längliche Partikel, die sich ebenso wie die gemahlenen Teilchen nicht befriedigend auf der zu beschichtenden Oberfläche anordnen. Aus der GB-A 2 151 202 war bekannt, daß Mikrokapseln, die aus einer öligen Substanz umschlossen von Wänden aus Polysulfon bestehen, hergestellt werden können, indem entsprechende Lösungen mittels einer Druckdüse versprüht werden. Da bestimmte Anwendungen Partikel mit sehr glatter Oberflächenstruktur erfordern, genügen weder die aus der Emulsion gewonnenen Teilchen noch die Mikrokapseln diesen Anforderungen. Auch in der EP-A2-441 047 wird beschrieben, daß kleine Teilchen mit poröser Oberfläche erhalten werden, wenn Lösungen amorpher Thermoplaste wie Polyarylenethersulfone sprühgetrocknet werden.

Aufgabe der vorliegenden Erfindung war es daher, Mikropulver auf der Basis von Polyarylenethersulfonen oder -ketonen zur Verfügung zu stellen, die aus sphärischen Teilchen mit regelmäßiger Oberfläche bestehen.

Diese Aufgabe wird durch die erfindungsgemäßen Mikropulver gelöst.

Die erfindungsgemäßen Mikropulver enthalten als wesentliche Komponente Polyarylenethersulfone oder -ketone. Selbstverständlich können sie auch Mischungen aus Polyarylenethersulfonen und -ketonen enthalten. Die erfindungsgemäßen Mikropulver sind überraschenderweise dadurch erhältlich, daß man die Polyarylenethersulfone oder -ketone löst oder deren Viskosität mit einer geeigneten Flüssigkeit herabsetzt und sie anschließend sprühtrocknet.

Erfindungsgemäß sind die so erhältlichen Teilchen regelmäßig und rund und weisen eine nahezu porenlose Oberfläche auf. Der mittlere Teilchendurchmesser (Volumenmittelwert) beträgt in der Regel 1 µm oder mehr. Er kann auch darunter liegen, meist ist er jedoch nicht kleiner als 0,5 µm. Im allgemeinen können die mittleren Teilchendurchmesser bis zu 80 µm betragen. Es ist auch möglich, daß sie geringfügig größer sind, beispielsweise 100 µm. Größere mittlere Teilchendurchmesser sind im allgemeinen für die meisten Anwendungen, insbesondere für die Herstellung wäßriger Dispersionen, nicht von Interesse. Vorzugsweise betragen die mittleren Teilchendurchmesser 2 bis 70 µm, besonders bevorzugt 2 bis 50 µm, beispielsweise 5 bis 50 µm. Ganz besonders bevorzugt betragen die mittleren Teilchendurchmesser 1 bis 20 µm, insbesondere 1 bis 10 µm. Die Teilchen sind im wesentlichen solide, d.h. sie sind nicht hohl und weisen im allgemeinen die Dichte der ihnen zugrundeliegenden Polyarylenethersulfone oder -ketone auf. Die Dichte der Teilchen kann aber auch geringfügig darunter liegen, beispielsweise wenn kleine Mengen Gas umschlossen werden.

Die erfindungsgemäßen Mikropulver zeichnen sich durch eine enge Teilchengrößenverteilung aus. Als Maß für die Breite der Teilchengrößenverteilung läßt sich der relative Spanfaktor $\Delta$ angeben (siehe A.H. Lefebvre: "Atomization and Sprays", Hemisphere Publishing Corporation, 1989, seite 100, Gleichung 3.40). Der relative Spanfaktor der erfindungsgemäßen Mikropulver beträgt im allgemeinen 1 bis 2. Er kann aber auch darüber liegen, meist jedoch nicht über 2,5. Bevorzugt werden Spanfaktoren bis etwa 1,5. Ganz besonders bevorzugt sind die Spanfaktoren kleiner als 1.

Als wesentliche Komponente A enthalten die erfindungsgemäßen Mikropulver Polyarylenethersulfone oder -ketone. Diese enthalten wiederkehrend Einheiten I

$$-O-Ar\left(-T-Ar^1\right)_t-Z\left(-Ar^2-Q\right)_q-Ar^3- \qquad (I)$$

Dabei können t und q unabhängig voneinander gleich oder verschieden voneinander sein und jeweils den Wert 0

oder eine ganze Zahl von 1 bis 3 annehmen. N bedeutet entweder -O- oder -S-, bevorzugt -O-. Unabhängig voneinander können T und Q gleich oder verschieden sein. Sie können eine chemische Bindung oder eine Gruppe ausgewählt aus -O-, -S-, C=O, S=O, $-SO_2-$, -N=N-, $-R^aC=CR^b-$ und $-CR^cR^d$ bedeuten. Darunter sind -O-, C=O, $-SO_2-$ und $-CR^cR^d-$ besonders bevorzugt. Bevorzugt sind T und Q auch eine chemische Bindung. $R^a$ bis $R^d$ können unabhängig voneinander entweder gleich oder verschieden voneinander sein und können entweder jeweils Wasserstoffatome oder $C_1$- bis $C_{10}$-Alkylgruppen, wie Methyl, Ethyl, Propyl oder t-Butyl, bevorzugt Wasserstoff oder Methyl bedeuten. Darüber hinaus können $R^c$ und $R^d$ auch $C_1$- bis $C_{10}$-Alkoxy-, $C_1$- bis $C_{10}$-Alkylaryl- oder $C_6$- bis $C_{18}$-Arylgruppen darstellen. Zu den bevorzugten Gruppen zählen Methoxy, Ethoxy, Propoxy, t-Butoxy, Benzyl und Phenyl. Die vorgenannten Gruppen können jeweils auch mit Fluor und/oder Chloratomen substituiert sein. Als Beispiel ist die Trifluormethyl- oder die p-Chlorphenylgruppe zu nennen. Erfindungsgemäß ist Z eine Gruppe ausgewählt aus C=O, S=O und $-SO_2-$, wobei C=O und $-SO_2-$ besonders bevorzugt werden. Die Variablen Ar bis $Ar^3$ können unabhängig voneinander die gleiche Bedeutung haben oder verschieden voneinander sein. Erfindungsgemäß stehen sie für $C_6$- bis $C_{18}$-Arylgruppen. Zu diesen zählen Phenyl, Biphenyl und Naphthyl. Vorzugsweise sind die Arylgruppen nicht substituiert, können aber Substituenten ausgewählt aus der Gruppe der $C_1$- bis $C_{10}$-Alkyl-, $C_1$- bis $C_{10}$-Alkylaryl, $C_6$- bis $C_{18}$-Aryl, $C_1$- bis $C_{10}$-Alkoxyreste und Halogenatome haben. Beispiele geeigneter Substituenten sind Methyl, Ethyl, Propyl, i-Propyl, n-Butyl, i-Pentyl, n-Hexyl, Methoxy, Ethoxy, Propoxy, Butoxy, Benzyl, Ethylphenyl, Phenyl, Fluor oder Chlor.

Im folgenden sind einige der bevorzugten wiederkehrenden Einheiten I aufgeführt:

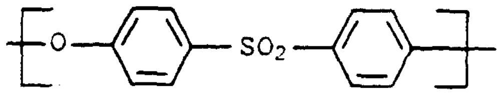

($I_1$)

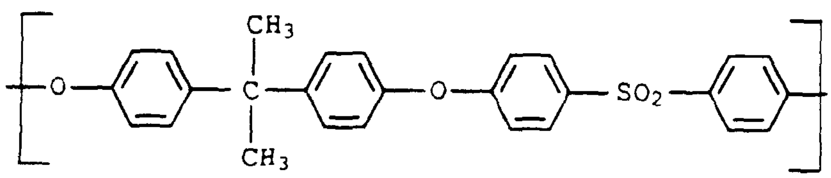

($I_2$)

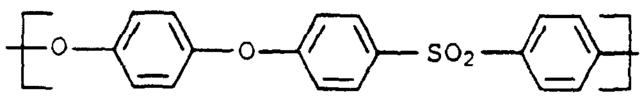

($I_3$)

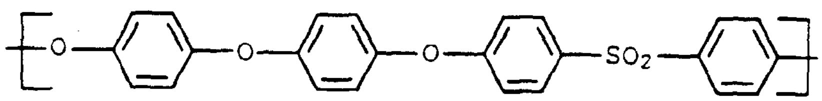

($I_4$)

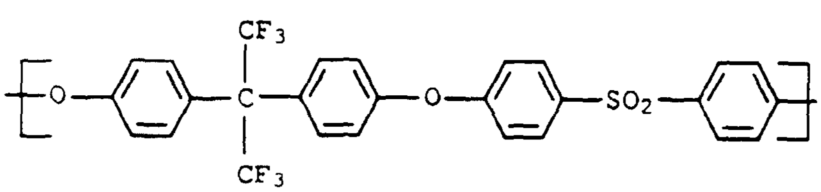

($I_5$)

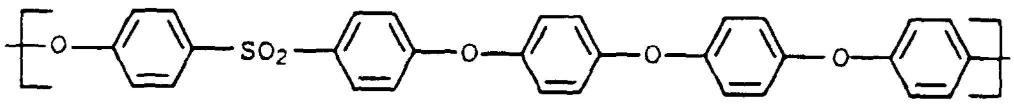

($I_6$)

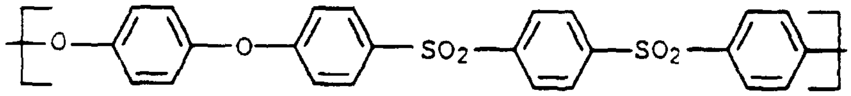

$(I_7)$

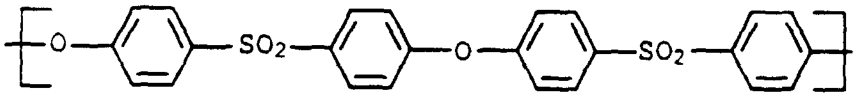

$(I_8)$

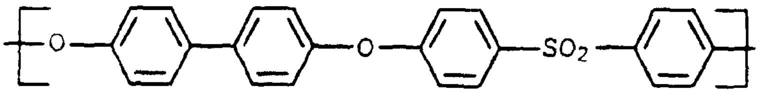

$(I_9)$

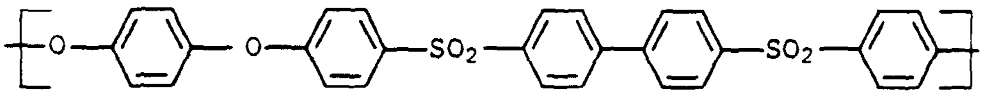

$(I_{10})$

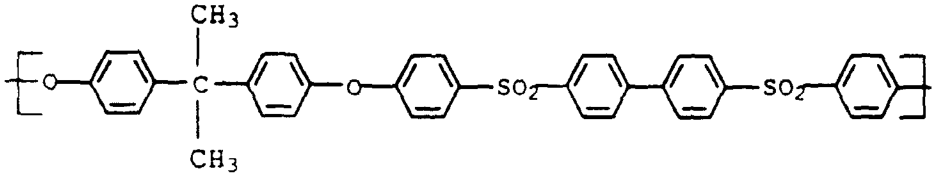

$(I_{11})$

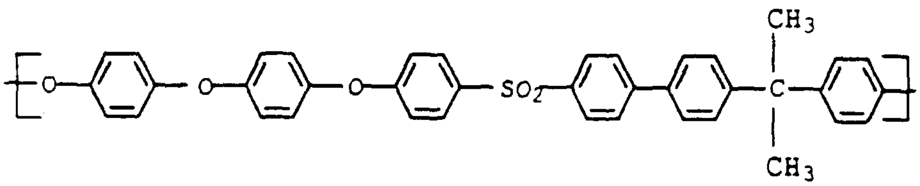

$(I_{12})$

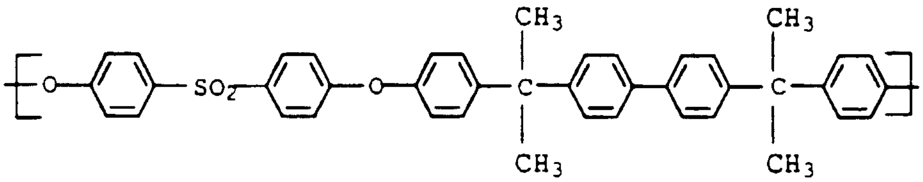

$(I_{13})$

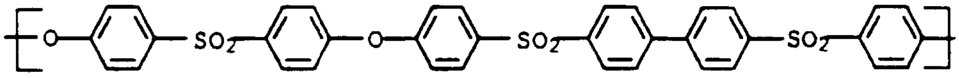

$(I_{14})$

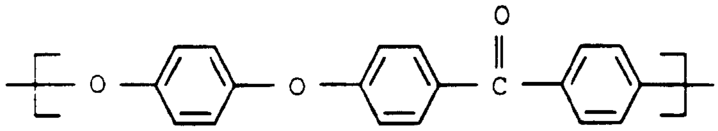

(I15)

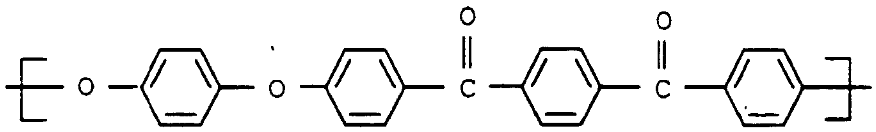

(I16)

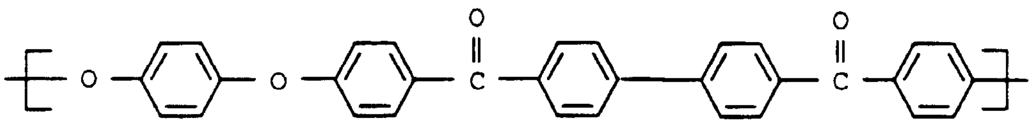

(I17)

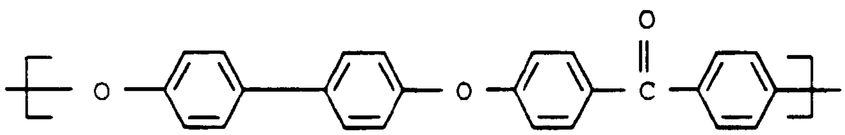

(I18)

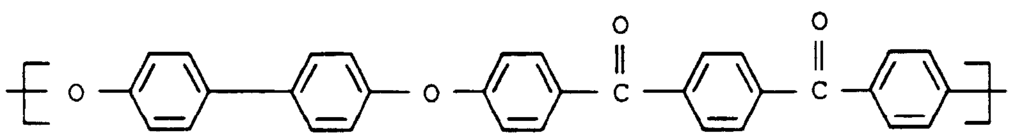

(I19)

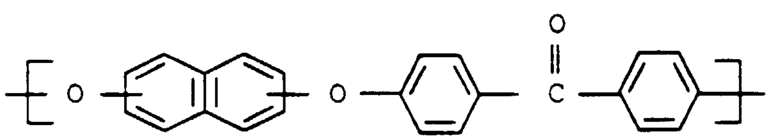

(I20)

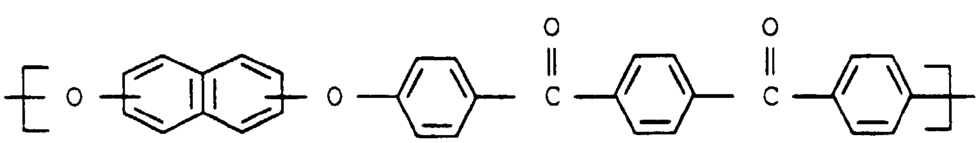

(I21)

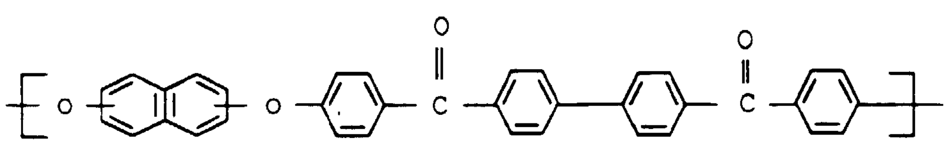

(I22)

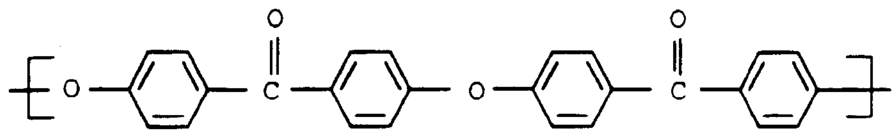 (I23)

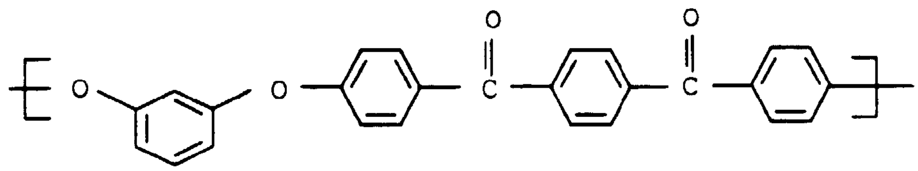 (I24)

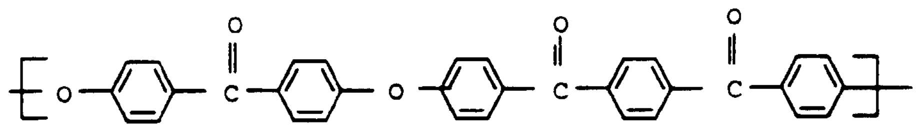 (I25)

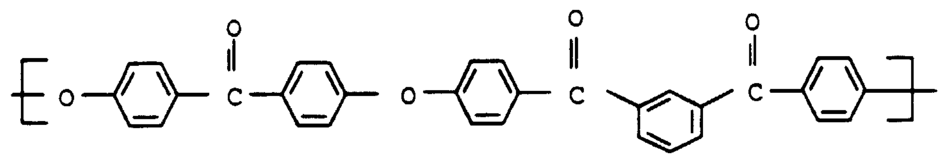 (I26)

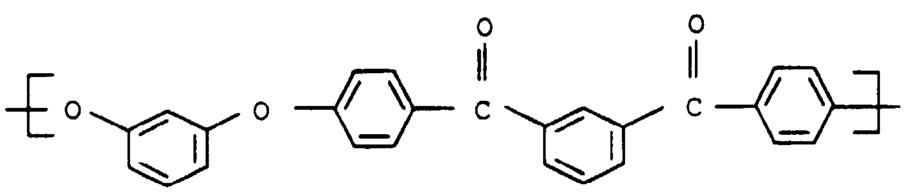 (I27)

Ganz besonders werden Mikropulver bevorzugt, die als wesentliche Komponente A Polyarylenethersulfone oder -ketone mit Struktureinheiten ($I_1$), ($I_2$), ($I_{25}$) oder ($I_{26}$) enthalten. Dazu zählen beispielsweise Mikropulver, die als wesentliche Komponente A Polyarylenethersulfone mit 0 bis 100 Mol-%, bevorzugt 5 bis 95 Mol-% Struktureinheiten ($I_1$) und 0 bis 100 Mol-%, bevorzugt 5 bis 95 Mol-% Struktureinheiten ($I_2$) enthalten.

Die Polyarylenethersulfone oder -ketone können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke- bzw. der Pfropfarme in den Copolymeren liegt in der Regel im Bereich von 1 000 bis 30 000 g/mol. Die Blöcke unterschiedlicher Struktur können alternierend oder statistisch angeordnet sein. Der Gewichtsanteil der Polyarylenethersulfone oder -ketone in den Co- oder Blockcopolymeren beträgt im allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersulfone oder -ketone mit bis zu 90 Gew.-%. Besonders bevorzugt werden Co- oder Blockcopolymere mit 20 bis 80 Gew.-% Polyarylether.

Die Polyarylenethersulfone oder -ketone können beliebige Endgruppen z.B. Halogen-, Methoxy-, Benzyloxy-, Phenoxy- oder Aminogruppen enthalten. Bevorzugte Endgruppen sind Halogen- oder Methoxygruppen.

Im allgemeinen weisen die Polyarylenethersulfone oder -ketone mittlere Molekulargewichte $\overline{M}_n$ (Zahlenmittel) im Bereich von 15 000 bis 60 000 g/mol und relative Viskositäten von 0,25 bis 0,95 dl/g auf. Die relativen Viskositäten werden je nach Löslichkeit der Polyarylenethersulfone oder -ketone entweder in 1 gew.-%iger N-Methylpyrrolidon-Lösung, in Mischungen aus Phenol und Dichlormethan oder in 96 %iger Schwefelsäure bei jeweils 20°C bzw. 25°C gemessen.

Die als Komponente A in Betracht kommenden Polyarylenethersulfone oder -ketone sind an sich bekannt und können nach an sich bekannten Methoden hergestellt werden. Polyarylenethersulfone oder -ketone entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenetherketone sind auch durch elektrophile (Friedel-Crafts-)Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethersulfonen oder -ketonen sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Erfindungsgemäß können die Mikropulver als wesentliche Komponente B Polyarylenethersulfone oder -ketone enthalten, die durch Umsetzen eines Polyarylenethersulfons oder -ketons A mit einer reaktiven Verbindung erhältlich sind. Die reaktiven Verbindungen enthalten neben einer C,C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactam- oder Halogenbenzylgruppe enthalten.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$-$C_{18}$-Alkanolen, die Mono- oder Diamide dieser Säuren wie N-Phenylmaleinimid, Maleinsäurehydrazid.

Bevorzugt werden α, β-ungesättigte Dicarbonsäuren bzw. deren Anhydride, Di-Ester und Mono-Ester der nachstehenden allgemeinen Struktur IV und V verwendet.

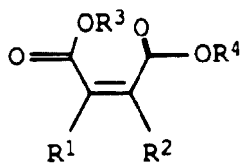

(IV)

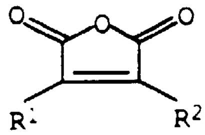

(V)

wobei

$R^1$, $R^2$, $R^3$ und $R^4$ unabhängig voneinander Wasserstoff sowie $C_1$-$C_{18}$-Alkyl-Gruppen sein können.

Besonders geeignete Verbindungen sind Maleinsäureanhydrid, Fumarsäure und Itaconsäure.

Die Polymeren und die reaktive Verbindung können z.B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im allgemeinen ein üblicher Radikalinitiator eingesetzt. Die Umsetzung wird im allgemeinen bei 75 - 150°C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können aber beispielsweise auch bei einer Temperatur von 270 - 350°C in der Schmelze

in einem kontinuierlich oder absatzweise arbeitenden Mischaggregat (z.B. Ein- oder Zweiwellenextruder, Kneter) umgesetzt, werden.

Die reaktive Verbindung wird dabei vorzugsweise in flüssiger Form, insbesondere innerhalb der Knetzone eines Mischaggregats zur Schmelze des Polymeren zudosiert.

Bevorzugt werden in den erfindungsgemäßen Mikropulvern als Polyarylenethersulfonen oder -ketonen B modifizierte Polyarylenethersulfone oder -ketone A eingesetzt, die durch Umsetzen von 80 bis 99,9 Gew.-%, insbesondere 90 bis 99 Gew.-% des unmodifizierten Polyarylenethersulfonen oder -ketonen A, mit 0,1 bis 20 Gew.-%, insbesondere 1 bis 10 Gew.-% der reaktiven Verbindung erhalten worden war.

Besonders bevorzugt werden als Komponente B mit 0,1 bis 1,5 Gew.-% Maleinsäureanhydrid gepfropfte Polyarylenethersulfone. Dabei werden Polyarylenethersulfone, enthaltend 5 bis 95 Mol-% Einheiten $I_1$ und 5 bis 95 Mol-% Einheiten $I_2$ bevorzugt.

Polyarylenethersulfone mit 80 bis 95, vorzugsweise 85 bis 95 mol-% Einheiten der Formel $I_2$ und $I_1$ und entsprechend 5 bis 20, vorzugsweise 5 bis 15 mol-% Einheiten der Formel $I_1$ bzw. $I_2$ seien hier insbesondere erwähnt.

Als Radikalstarter können in der Regel die in der Fachliteratur (z.B. J.K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone A verwendet. Selbstverständlich können auch Mischungen unterschiedlicher Radikalstarter eingesetzt werden.

Erfindungsgemäß können die Mikropulver auch Mischungen aus den Komponenten A und B enthalten. Neben den wesentlichen Komponenten können die Mikropulver noch z.B. bis zu 40 Gew.-% weiterer Additive wie Flammschutzmittel, Farbstoffe oder Stabilisatoren enthalten.

Die Sprühtrocknung der Polyarylenethersulfone oder -ketone erfolgt durch Zerstäuben der Lösungen in ein unter den Verfahrensbedingungen inertes Gas wie Luft oder Stickstoff. Vorzugsweise werden die Polyarylenethersulfone oder -ketone vor dem Versprühen in einem Lösungsmittel gelöst.

Als Lösungsmittel eignen sich dipolar aprotische Flüssigkeiten. Zu den geeigneten Lösungsmitteln zählen N-substituierte Säureamide, Sulfoxide und Sulfone. Beispiele sind N,N-Dimethylformamid, N,N-Dimethylacetamid, N-Methylpyrrolidon, Dimethylsulfon, Tetramethylensulfon (Sulfolan) oder Diphenylsulfon. Darunter sind N-Methylpyrrolidon, Dimethylsulfoxid und Dimethylformamid besonders bevorzugt. Für besonders schwerlösliche Polyarylenetherketone eignet sich vor allem Diphenylsulfon, Ditolylsulfon oder Trifluoressigsäure als Lösungsmittel.

Entweder kann die Zerstäubungstemperatur so gewählt werden, daß die Schmelze oder die Lösung, die für die Zerstäubung geeignete Viskosität besitzt, oder der Feststoffgehalt der Lösung kann so gewählt werden, daß die Lösung die geeignete Viskosität bei einer bestimmten Zerstäubungstemperatur hat, wobei letzteres bevorzugt wird. Die reduzierte Viskosität der Lösung beträgt bei Zerstäubungstemperatur bis zu 8 000 mPas. Sie kann auch darüber liegen, beispielsweise 10 000 mPas. Im allgemeinen sind Lösungen höherer Viskositäten nur noch schwer zu zerstäuben. Bevorzugt werden reduzierte Viskositäten von 1 000 mPas und weniger. Besonders bevorzugt werden 5 bis 500 mPas, insbesondere 10 bis 100 mPas.

Im allgemeinen werden die Lösungen, die Raumtemperatur haben, zerstäubt. Um deren Viskosität zu verringern, kann es erforderlich sein, die Lösungen bei erhöhter Temperatur, beispielsweise bei 50 bis 100°C zu versprühen. In der Regel liegen die Zerstäubungstemperaturen jedoch unterhalb der Siedetemperatur des jeweiligen Lösungsmittels.

Zur Zerstäubung werden Mehrstoffdüsen, insbesondere Zweistoffdüsen verwendet werden. Als Beispiel hierfür seien zweiflutige oder dreiflutige Zweistoffdüsen genannt. Um einen Drall oder eine Strömungsumlenkung zu erzeugen, können die Zweistoffdüsen Einbauten enthalten. Diese können sowohl gas als auch flüssigkeitsseitig angebracht sein. Es ist auch möglich, Ultraschallzerstäuber einzusetzen.

Das Verhältnis von Zerstäubergasmassen- zu Flüssigkeitsmassendurchsatz ist im allgemeinen größer 2. Als besonders vorteilhaft haben sich Zerstäubergas-/Flüssigkeitsdurchsätze im Verhältnis von 3 bis 10 erwiesen. In der Regel sind Gasdrucke von 5 bar oder mehr erforderlich. Mehr als 100 bar Gasdruck sind nur selten nötig. Im allgemeinen betragen die Gasdrucke von 10 bis 70 bar.

Nach der Zerstäubung können die Flüssigkeitströpfchen in einer Trockenkammer beispielsweise in einem Sprühturm bekannter Bauart getrocknet werden (siehe z.B. K. Masters: Spray Drying Handbook, Leonhard Hill Books, London 1972). Die Verdampfung des Lösungsmittels kann sowohl bei Normaldruck als auch im Vakuum erfolgen. Die zur Lösungsmittelverdampfung erforderliche Wärme wird dabei bevorzugt am Kopf des Turmes durch ein inertes Trocknungsgas zugeführt. Als Trocknungsgas eignet sich vor allem Stickstoff. Es können aber auch andere Gase wie Kohlendioxid oder Luft verwendet werden. Die Gastemperatur am Kopf des Trockenturms ist vorzugsweise größer als die Verdampfungstemperatur des Lösungsmittels und kann von Raumtemperatur bis 500°C betragen. Im allgemeinen beträgt sie 100°C oder mehr. Bevorzugt liegt sie im Bereich von 200°C bis 300°C.

Vorzugsweise strömt das Trocknungsgas zusammen mit den Flüssigkeitströpfchen durch den Trockenturm und wird am Ausgang des Turmes zusammen mit dem Trockengut abgesaugt. Die Gastemperatur am Ausgang des Turmes hängt von dem gewünschten Restlösungsmittelgehalt des Pulvers ab. Sie kann von Raumtemperatur bis knapp weniger als die Gastemperatur am Kopf des Trockenturms betragen. In der Regel beträgt sie 50°C oder mehr, beispielsweise 120°C bis 170°C. Im allgemeinen sind Temperaturen größer als 200°C nicht erforderlich.

Das Pulver kann im allgemeinen wie üblich durch Filter oder Zyklone von dem Gasstrom getrennt werden. Für die Herstellung der erfindungsgemäßen Mikropulver werden bevorzugt Filter zur Feststoffabtrennung verwendet.

Der Restlösungsmittelgehalt des erfindungsgemäßen Mikropulvers beträgt ohne Nachtrocknung im allgemeinen nicht mehr als 5 %,. insbesondere kleiner als 2 %. Um den Gehalt an Restlösungsmittel weiter zu verringern, kann der Sprühtrocknung eine Nachtrocknung, die mit einer Nachkühlung kombiniert sein kann, nachgeschaltet sein. Die Nachtrocknung kann beispielsweise in einem Wirbelbett oder Fließbett erfolgen.

Bei der Sprühtrocknung ist es möglich Sprühhilfsmittel mitzuverwenden. Als Sprühhilfsmittel sind beispielsweise feinkörnige anorganische Materialien wie Silizumdioxid, hydrophobe Kieselsäure oder Aluminiumoxid insbesondere Polytetrafluorethylen zu nennen. Die Sprühhilfsmittel werden in der Regel in Mengen von 0,1 bis 20 Gew.-%, insbesondere 1 bis 5 Gew.-%, bezogen auf Polyarylenethersulfon oder -keton, ber. 100 %ig, angewandt.

Die erfindungsgemäßen Mikropulver eignen sich vor allem zum Beschichten von Oberflächen. Bevorzugt können die erfindungsgemäßen Mikropulver zum Beschichten metallischer Oberflächen verwendet werden. Ganz besonders eignen sich die Mikropulver zum Herstellen gleitfähiger Oberflächen oder Antihaftbeschichtungen für Gegenstände aller Art, wie Gleitlager, Haushaltsgeräte oder Elektronikbauteile. Dies kann beispielsweise mittels eines Wirbelsinterverfahrens oder dem Aufbringen einer Dispersion des Mikropulvers erfolgen. Daneben ist es möglich, Oberflächen dadurch zu beschichten, daß das Mikropulver, z.B. mit Hilfe eines elektrostatischen Feldes, auf die Oberfläche gespritzt wird.

Die erfindungsgemäßen Mikropulver lassen sich in Nichtlösungsmitteln, vorzugsweise in Wasser dispergieren. Üblicherweise enthalten die wäßrigen Dispersionen von 5 bis 50 Gew.-%, vorzugsweise von 10 bis 30 Gew.-% an Mikropulver. Neben dem Mikropulver können die wäßrigen Dispersionen auch andere Kunststoffe dispergiert enthalten. Bevorzugte Kunststoffe sind fluorhaltige Olefinpolymerisate, insbesondere Polytetrafluorethylen. Darüber hinaus ist es möglich den Dispersionen Dispergierhilfsmittel wie Polyvinylalkohol oder Glycerin zuzusetzen. Die Dispersionen können darüber hinaus Fließhilfsmittel sowie Pigmente enthalten. Die Dispersion kann beispielsweise auf die Oberfläche aufgespritzt oder aufgestrichen werden.

Beispiele

Bestimmung der Teilchengrößen

Die Teilchengrößen wurden mittels eines Partikelgrößenanalysators (Modell Helos der Firma Sympatec) bestimmt. Dazu wurden jeweils 1 g des Mikropulvers in 100 ml $H_2O$ unter Zusatz eines Tensids mittels Ultraschall dispergiert und von der so erhaltenen Dispersion 1 ml abgenommen und wiederum in 100 ml Wasser dispergiert. Die Messung der Teilchengrößen erfolgte durch Laser-Beugungsbestimmung (Laser-Beugungs-Partikelgrößenmeßgerät Cilas 715).

Beispiel 1

Es wurde ein Polyarylenethersulfon, enthaltend im wesentlichen sich wiederholende Einheiten $I_1$

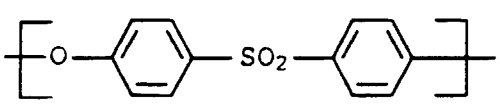

$(I_1)$

mit einer Viskositätszahl von 52 ml/g (gemessen in einer 1 Gew.-%igen Lösung aus Phenol und 1,2-Dichlorbenzol im Verhältnis 1:1 bei 25°C) und einem Volumenfließindex von 140 ml/10 min (gemessen bei 360°C) verwendet. Es wurde eine 10 gew.-%ige Lösung dieses Polyarylenethersulfons in N-Methylpyrrolidon hergestellt. Diese Lösung, die eine reduzierte Viskosität von 50 mPas hatte, wurde bei 25°C in einem Ultraschallzerstäuber (US 1, Typ 7/0.017.16.60 der Firma Lechler) versprüht. Als Trockenkammer wurde ein Trockenturm mit einem Durchmesser von 20 cm und einer Länge von 2 m verwendet. Der als Trockengas verwendete Stickstoff hatte am Kopf des Turmes eine Temperatur von 205°C. Die Temperatur am Ausgang des Turmes betrug 150°C. Der Durchsatz des Trockengases betrug 20 kg/h und der der Lösung 300 g/h.

Es wurden sphärische Teilchen mit glatter Oberflächenstruktur und einem mittleren Durchmesser (Zahlenmittelwert) von 20 µm erhalten. Der Restlösungsmittelgehalt des Pulvers betrug 5 %. Die Teilchen sind in Abbildung 1-3 abgebildet.

Beispiel 2

Eine Mischung aus 16 Gew.-% des in Beispiel 1 beschriebenen Polyarylenethersulfons in N-Methylpyrrolidon wurde hergestellt. Diese Lösung, die bei Raumtemperatur eine reduzierte Viskosität von 200 mPas hatte, wurde in einer pneumatischen Zweistoffdüse mit 0,5 mm Flüssigkeitseinsatz (Modell 970 der Firma Schlick) bei einem Druck von 2 bar versprüht. Der Flüssigkeitsdurchsatz betrug 300 g/h. Stickstoff, dessen Temperatur 220°C betrug, diente als Düsengas. Als Trockenkammer wurde der unter Beispiel 1 beschriebene Trockenturm verwendet. Als Trockengas wurde Stickstoff, dessen Temperatur am Kopf des Trockenturms 180°C betrug, verwendet. Die Stickstofftemperatur am Ausgang des Turms betrug 155°C.

Es wurden sphärische Teilchen mit glatter Oberfläche und einem mittleren Durchmesser (Zahlenmittelwert) von 6,5 µm erhalten. Dabei waren 96 Gew.-% des Mikropulvers Teilchen mit einem Durchmesser von kleiner 24 µm. Der relative Span-Faktor betrug 2,5. Die Teilchendichte betrug 1,37 g/ml und das Schüttgewicht des Pulvers betrug 200 g/l.

Die Abbildungen 4 und 5 zeigen Partikelgrößenverteilungen wie sie typischerweise beim erfindungsgemäßen Sprühtrocknen des unter Beispiel 1 angegebenen Polyarylenethersulfons, gelöst in N-Methylpyrrolidon, bei weiteren Versuchen erhalten wurden.

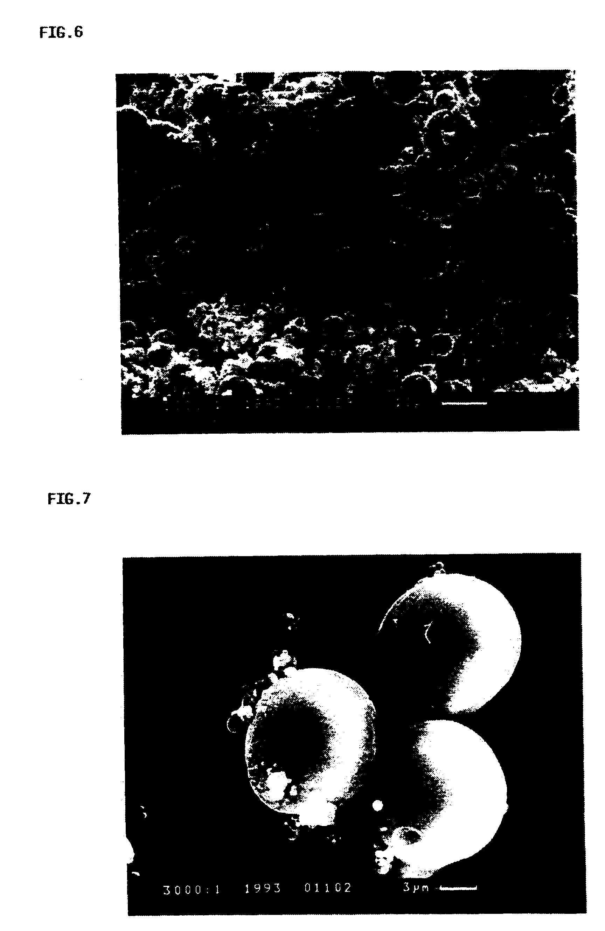

Die Abbildungen 6 und 7 zeigen raster-elektronenmikroskopische Aufnahmen der in weiteren Versuchen typischerweise erhaltenen erfindungsgemäßen Mikropulver aus dem unter Beispiel 1 angegebenen Polyarylenethersulfon, das aus einer N-Methylpyrrolidonlösung sprühgetrocknet wurde.

**Patentansprüche**

**1.** Mikropulver mit einem relativen Spanfaktor, bestimmt wie beschrieben in der Beschreibung, von nicht mehr 2,5 aus sphärischen Teilchen einer im wesentlichen glatten Oberflächenstruktur, enthaltend als wesentliche Komponente Polyarylenethersulfone oder -ketone, und einer Dichte, die im wesentlichen der der Polyarylenethersulfone oder -ketone entspricht, erhältlich durch Sprühtrocknung derer Lösungen unter Verwendung einer Mehrstoffdüse.

**2.** Mikropulver nach Anspruch 1 mit einem relativen Spanfaktor von kleiner als 1.

**3.** Mikropulver nach Anspruch 1 oder 2, wobei die Mehrstoffdüse eine zweiflutige oder dreiflutige Zweistoffdüse ist.

**4.** Mikropulver nach einem der Ansprüche 1 bis 3, enthaltend als wesentliche Komponente

A) Polyarylenethersulfone oder -ketone enthaltend, wiederkehrende Einheiten I

$$-O-Ar\left(-T-Ar^1\right)_t Z\left(-Ar^2-Q-\right)_q Ar^3- \qquad (I)$$

in denen t und q jeweils den Wert 0 oder eine ganze Zahl von 1 bis 3 annehmen können; N -O- oder -S- bedeuten kann; T und Q eine chemische Bindung oder eine Gruppe ausgewählt aus -O-, -S-, C=O, S=O, $-SO_2-$, -N=N-, $-R^aC=CR^6-$ und $-CR^cR^d-$ sein können; $R^a$ und $R^b$ jeweils Wasserstoffatome, $C_1$- bis $C_{10}$-Alkylgruppen, $R^c$ und $R^d$ jeweils Wasserstoffatome, $C_1$- bis $C_{10}$-Alkyl-, $C_1$- bis $C_{10}$-Alkoxy-, $C_1$- bis $C_{10}$-Alkylaryl- oder $C_6$- bis $C_{18}$-Arylgruppen bedeuten können, wobei die vorgenannten Gruppen jeweils auch mit Fluor und/oder Chloratomen substituiert sein können; Z eine Gruppe ausgewählt aus C=O, S=O und- $SO_2$- sein kann; Ar, $Ar^1$, $Ar^2$ und $Ar^3$ für $C_6$- bis $C_{18}$-Arylgruppen stehen, wobei diese Substituenten haben können, ausgewählt aus $C_1$- bis $C_{10}$-Alkyl-, $C_1$- bis $C_{10}$-Alkylaryl-, $C_6$- bis $C_{18}$-Aryl-, $C_1$- bis $C_{10}$-Alkoxyreste und Halogenatome oder deren statistischen Copolymerisate oder Blockcopolymerisate und/oder

B) Polyarylenethersulfone oder -ketone, erhältlich durch Umsetzen von A mit einer reaktiven Verbindung, die neben einer C-C-Doppel- oder Dreifachbindung eine bzw. mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen enthalten oder deren statistischen Copolymerisaten oder Blockcopolymerisaten.

**5.** Mikropulver nach einem der Ansprüche 1 bis 4, enthaltend als wesentliche Komponente Polyarylenethersulfone, enthaltend 5 bis 95 Mol-% wiederkehrende Einheiten II

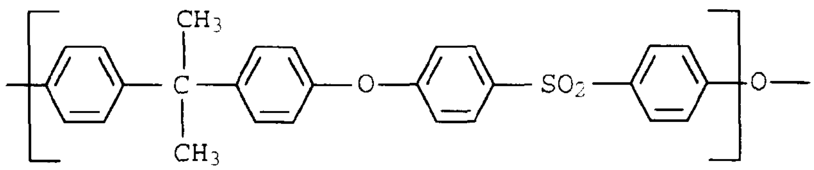

(II)

und
5 bis 95 Mol-% wiederkehrende Einheiten III

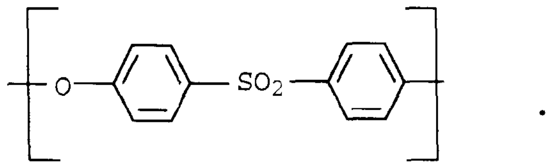

(III)

6. Mikropulver nach einem der Ansprüche 1 bis 5, in denen der mittlere Teilchendurchmesser 1 bis 100 µm beträgt.

7. Mikropulver nach einem der Ansprüche 1 bis 6, erhältlich durch Sprühtrocknung von Polyarylenethersulfonlösungen, wobei als Lösungsmittel N-Methylpyrrolidon, Dimethylsulfoxid oder Dimethylformamid ist.

8. Verfahren zur Herstellung von Mikropulvern, mit einem relativen Spanfaktor, bestimmt wie beschrieben in der Beschreibung, von nicht mehr als 2,5 aus sphärischen Teilchen mit einer im wesentlichen glatten Oberflächenstruktur enthaltend als wesentliche Komponente Polyarylethersulfone oder ketone und einer Dichte, die im wesentlichen der der Polyarylenethersulfone oder -ketone entspricht, dadurch gekennzeichnet, daß man Polyarylenethersulfon- oder -ketonlösungen unter Verwendung einer Mehrstoffdüse sprühtrocknet.

9. Verfahren nach Anspruch 1, dadurch gekennzeichnet, daß man als Merhstoffdüse eine zweiflutige oder dreiflutige Zweistoffdüse verwendet.

10. Verfahren nach Anspruch 8 oder 9, dadurch gekennzeichnet, daß man ein Verhältnis von Zerstäubergasmassen zu Flüssigkeitsmassendurchsatz von 3 bis 10 wählt.

11. Verwendung der Mikropulver gemäß einem der Ansprüche 1 bis 7 zur Herstellung wäßriger Dispersionen.

12. Wäßrige Dispersionen, enthaltend Mikropulver gemäß einem der Ansprüche 1 bis 7.

13. Wässrige Dispersionen, nach Anspruch 12, enthaltend fluorhaltige Olefinpolymerisate.

14. Beschichtungen, hergestellt unter Verwendung der wäßrigen Dispersionen nach Anspruch 12 oder 13.

**Claims**

1. A micropowder having a relative span factor, determined as described in the description, of not more than 2.5, consisting of spherical particles possessing an essentially smooth surface structure, containing, as an essential component, a polyarylene ether sulfone or polyarylene ether ketone, and having a density which essentially corresponds to that of the polyarylene ether sulfone or polyarylene ether ketone obtainable by spray-drying a solution thereof using a multimaterial nozzle.

2. A micropowder as claimed in claim 1, having a relative span factor of less than 1.

3. A micropowder as claimed in claim 1 or 2, the multimaterial nozzle being a double-flow or triple-flow two-material

nozzle.

**4.** A micropowder as claimed in any of claims 1 to 3, containing, as essential component,

A) a polyarylene ether sulfone or polyarylene ether ketone containing repeating units I

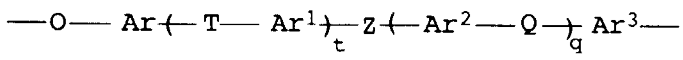 (I)

where t and q may each be 0 or an integer from 1 to 3, N may be -O- or -S-, T and Q may be a chemical bond or a group selected from -O-, -S-, C=O, S=O, $-SO_2-$, -N=N-, $-R^aC=CR^b-$ or $-CR^cR^d-$, $R^a$ and $R^b$ may each be hydrogen, $C_1$-$C_{10}$-alkyl, $R^c$ and $R^d$ may each be hydrogen, $C_1$-$C_{10}$-alkyl, $C_1$-$C_{10}$-alkoxy, $C_1$-$C_{10}$-alkylaryl or $C_6$-$C_{18}$-aryl, where each of the abovementioned groups may furthermore be substituted by fluorine or chlorine, Z may be a group selected from C=O, S=O and $-SO_2-$ and Ar, $Ar^1$, $Ar^2$ and $Ar^3$ are each $C_6$-$C_{18}$-aryl, each of which may have substituents selected from $C_1$-$C_{10}$-alkyl, $C_1$-$C_{10}$-alkylaryl, $C_6$-$C_{18}$-aryl, $C_1$-$C_{10}$-alkoxy and halogen, or a random copolymer or block copolymer thereof and/or

B) a polyarylene ether sulfone or polyarylene ether ketone obtainable by reacting A with a reactive compound which, in addition to a C-C double or triple bond, contains one or more carbonyl, carboxyl, carboxylate, anhydride, amide, imide, carboxylic ester, amino, hydroxyl, epoxy, oxazoline, urethane, urea, lactam or halobenzyl groups, or a random copolymer or block copolymer thereof.

**5.** A micropowder as claimed in any of claims 1 to 4, containing, as an essential component, a polyarylene ether sulfone containing from 5 to 95 mol% of repeating units II

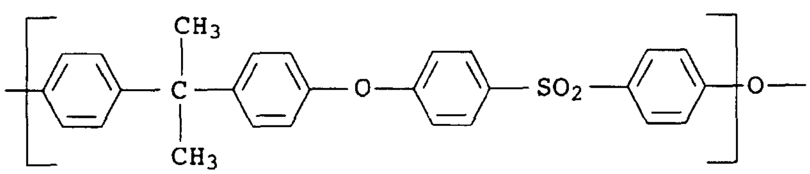 (II)

and
from 5 to 95 mol% of repeating units III

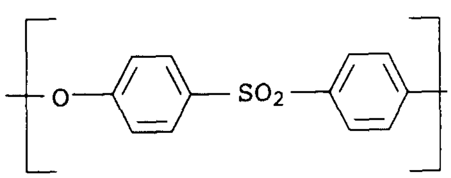 . (III)

**6.** A micropowder as claimed in any of claims 1 to 5, wherein the average particle diameter is from 1 to 100 µm.

**7.** A micropowder as claimed in any of claims 1 to 6, obtainable by spray drying a polyarylene ether sulfone solution, the solvent used being N-methylpyrrolidone, dimethyl sulfoxide or dimethylformamide.

**8.** A process for the preparation of a micropowder having a relative span factor, determined as described in the description, of not more than 2.5, consisting of spherical particles possessing an essentially smooth surface structure containing, as an essential component, a polyarylene ether sulfone or polyarylene ether ketone and having a density which essentially corresponds to that of the polyarylene ether sulfone or polyarylene ether ketone, wherein

a solution of the polyarylene ether sulfone or of the polyarylene ether ketone is spray-dried.

9. A process as claimed in claim 8, wherein the multimaterial nozzle used is a double-flow or triple-flow two-material nozzle.

10. A process as claimed in claim 8 or 9, wherein a ratio of mass throughput of atomizing gas to mass throughput of liquid of from 3 to 10 is chosen.

11. Use of a micropowder as claimed in any of claims 1 to 7 for the preparation of aqueous dispersions.

12. An aqueous dispersion containing a micropowder as claimed in any of claims 1 to 7.

13. An aqueous dispersion as claimed in claim 12, containing a fluorine-containing olefin polymer.

14. A coating produced using an aqueous dispersion as claimed in claim 12 or 13.

**Revendications**

1. Micropoudre avec un facteur d'ampleur relatif, déterminé de la manière décrite dans la description, non supérieur à 2,5, formée de particules sphériques, d'une structure surfacique sensiblement lisse, contenant, à titre de composants essentiels, des polyarylèneéthersulfones ou -cétones et d'une masse volumique qui correspond essentiellement à celle des polyarylèneéthersulfones ou -cétones, que l'on peut obtenir par le séchage par pulvérisation de leurs solutions, en recourant à l'emploi d'un ajutage multi-matière.

2. Micropoudre suivant la revendication 1 avec un facteur d'ampleur relatif inférieur à 1.

3. Micropoudre suivant la revendication 1 ou 2, où l'ajutage multi-matière est un ajutage pour deux matières à deux flux ou à trois flux.

4. Micropoudre suivant l'une quelconque des revendications 1 à 3, contenant, à titre de composants essentiels,

A) des polyarylèneéthersulfones ou -cétones qui contiennent des unités récurrentes I

$$-O-Ar\{T-Ar^1\}_t\text{-}Z\{Ar^2-Q\}_qAr^3- \qquad (I)$$

dans lesquelles t et q sont chacun égaux à 0 ou représentent un nombre entier dont la valeur varie de 1 à 3, N représente -O- ou -S-, T et Q représentent une liaison chimique ou un groupe choisi parmi -O-, -S-, C=O, S=O, $-SO_2-$, -N=N-, $-R^aC=CR^6-$ et $-CR^cR^d-$, $R^a$ et $R^b$ représentent à chaque fois des atomes d'hydrogène, des radicaux alkyle en $C_1$ à $C_{10}$, $R^c$ et $R^d$ représentent à chaque fois des atomes d'hydrogène, des radicaux alkyle en $C_1$ à $C_{10}$, alcoxy en $C_1$ à $C_{10}$, alkylaryle en $C_1$ à $C_{10}$, ou aryle en $C_6$ à $C_{18}$, où les groupes précités peuvent aussi à chaque fois être substitués par des atomes de fluor et/ou de chlore, Z est choisi dans le groupe formé par C=O, S=O et $-SO_2-$, Ar, $Ar^1$, $Ar^2$ et $Ar^3$ représentent des radicaux aryle en $C_6$ à $C_{18}$, où ceux-ci peuvent comporter des substituants, choisis parmi les radicaux alkyle en $C_1$ à $C_{10}$, alkylaryle en $C_1$ à $C_{10}$, aryle en $C_6$ à $C_{18}$, alcoxy en $C_1$ à $C_{10}$, et des atomes d'halogènes, ou leurs copolymères stochastiques ou leurs copolymères séquencés et/ou

B) des polyarylèneéthersulfones ou -cétones, que l'on peut obtenir par la réaction de A avec un composé réactif, qui contiennent, outre une double liaison C-C ou une triple liaison C-C, un ou plusieurs radicaux carbonyle, acide carboxylique, carboxylate, anhydride d'acide, amide d'acide, imide d'acide, ester d'acide carboxylique, amino, hydroxyle, époxy, oxazoline, uréthanne, urée, lactame ou halogénobenzyle, ou leurs copolymères stochastiques ou leurs copolymères séquencés.

5. Micropoudre suivant l'une quelconque des revendications 1 à 4, contenant, à titre de composants essentiels, des polyarylèneéthersulfones qui contiennent de 5 à 95% molaires d'unités récurrentes II

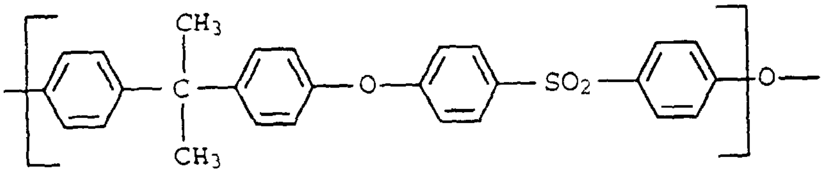

(II)

et

5 à 95% molaires d'unités récurrentes III

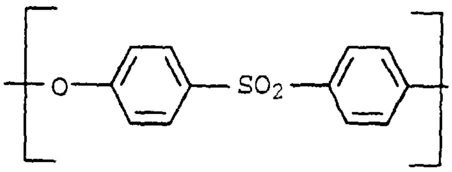

(III)

**6.** Micropoudre suivant l'une quelconque des revendications 1 à 5, dans laquelle le diamètre moyen des particules varie de 1 à 100 µm.

**7.** Micropoudre suivant l'une quelconque des revendications 1 à 6, que l'on peut obtenir par le séchage par pulvérisation de solutions de polyarylèneéthersulfones, où le solvant est la N-méthylpyrrolidone, le sulfoxyde de diméthyle ou le diméthylformamide.

**8.** Procédé de préparation de micropoudres, possédant un facteur d'ampleur relatif, déterminé de la manière décrite dans la description, non supérieur à 2,5, constituées de particules sphériques, d'une structure surfacique essentiellement lisse, contenant, à titre de composants essentiels, des polyaryléthersulfones ou -cétones et une masse volumique qui correspond essentiellement à celles de polyarylèneéthersulfones ou -cétones, caractérisé en ce que l'on sèche par pulvérisation des solutions de polyarylèneéthersulfones ou -cétones, en recourant à l'emploi d'un ajutage multi-matière.

**9.** Procédé suivant la revendication 1, caractérisé en ce que l'on utilise, à titre d'ajutage multi-matière, un ajutage pour deux matières à deux flux ou à trois flux.

**10.** Procédé suivant la revendication 8 ou 9, caractérisé en ce que l'on choisit un rapport des masses de gaz à pulvériser au débit des masses de liquide de 3 à 10.

**11.** Utilisation des micropoudres suivant l'une quelconque des revendications 1 à 7, pour la fabrication de dispersions aqueuses.

**12.** Dispersions aqueuses qui contiennent des micropoudres suivant l'une quelconque des revendications 1 à 7.

**13.** Dispersions aqueuses suivant la revendication 12, contenant des polymères d'oléfines fluorés.

**14.** Revêtements, obtenus en recourant à l'emploi des dispersions aqueuses suivant la revendication 12 ou 13.

FIG. 1

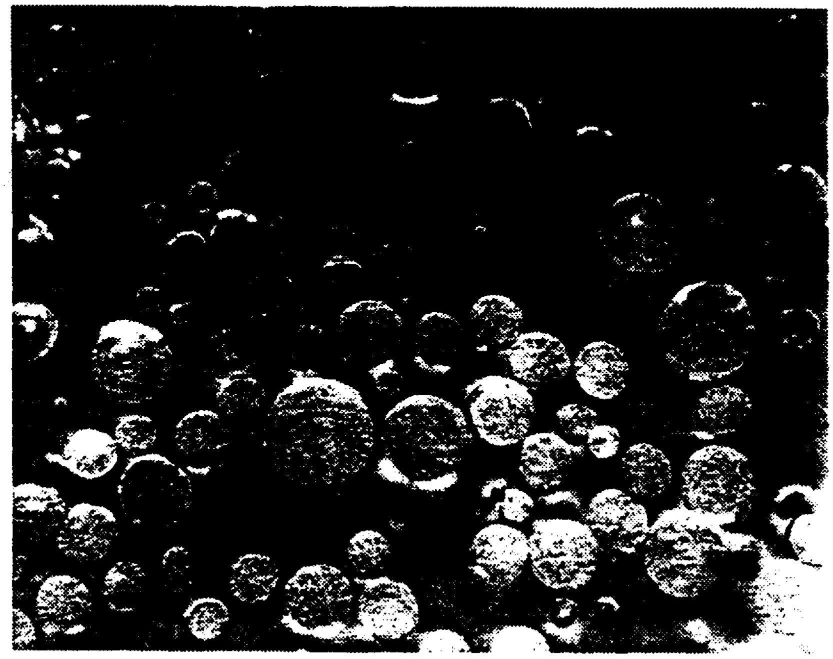

25089201

Vergr. 530:1

FIG.2

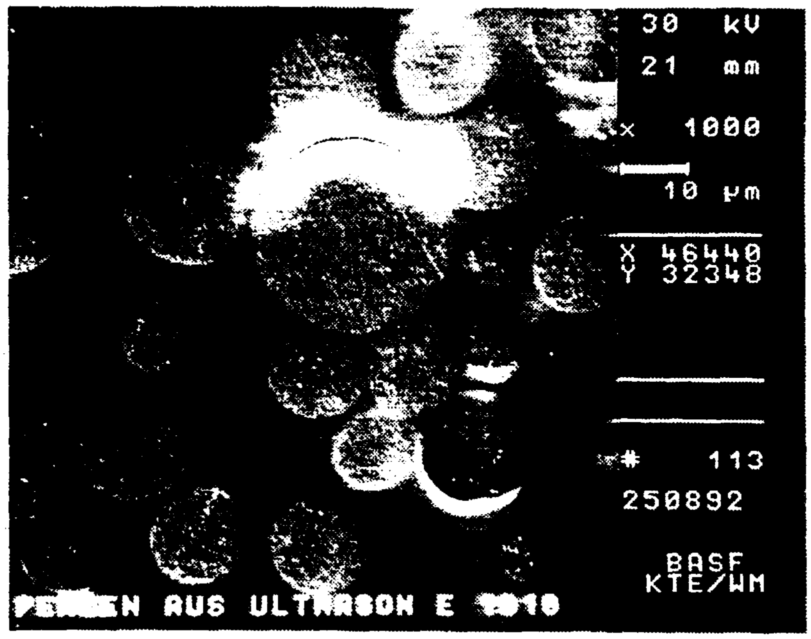


Vergr.
1000:1

FIG. 3

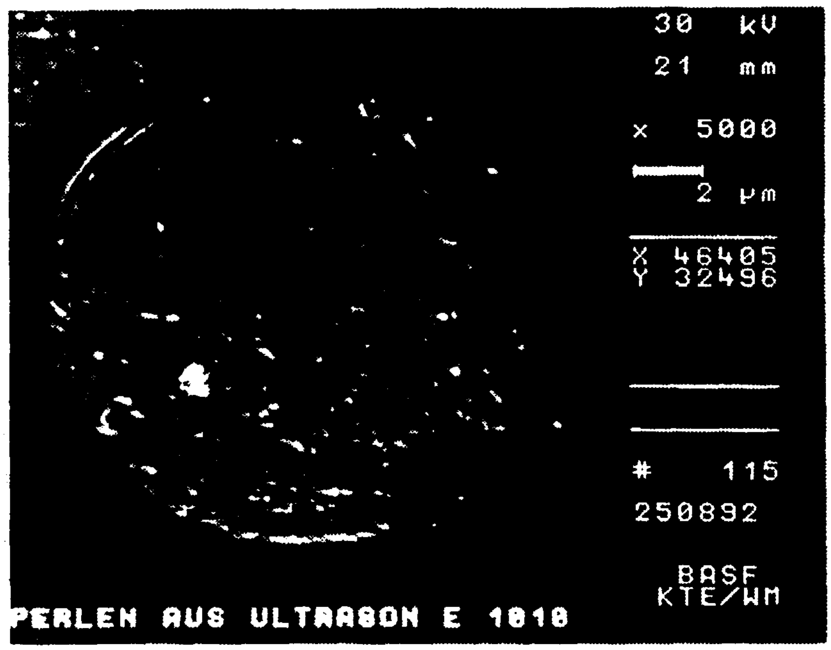


Vergr.
5000:1

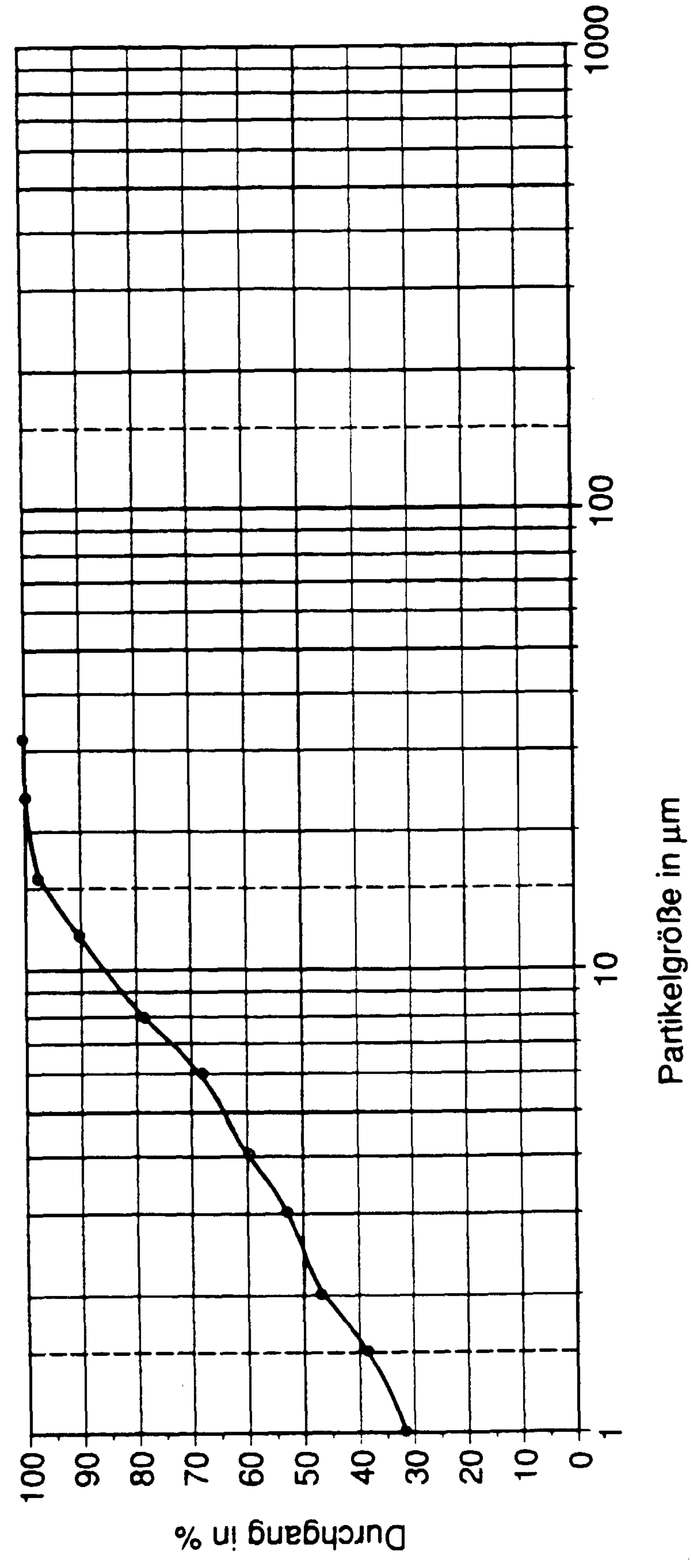
Partikelgröße in µm
1
10
100
1000
Durchgang in %
0
10
20
30
40
50
60
70
80
90
100

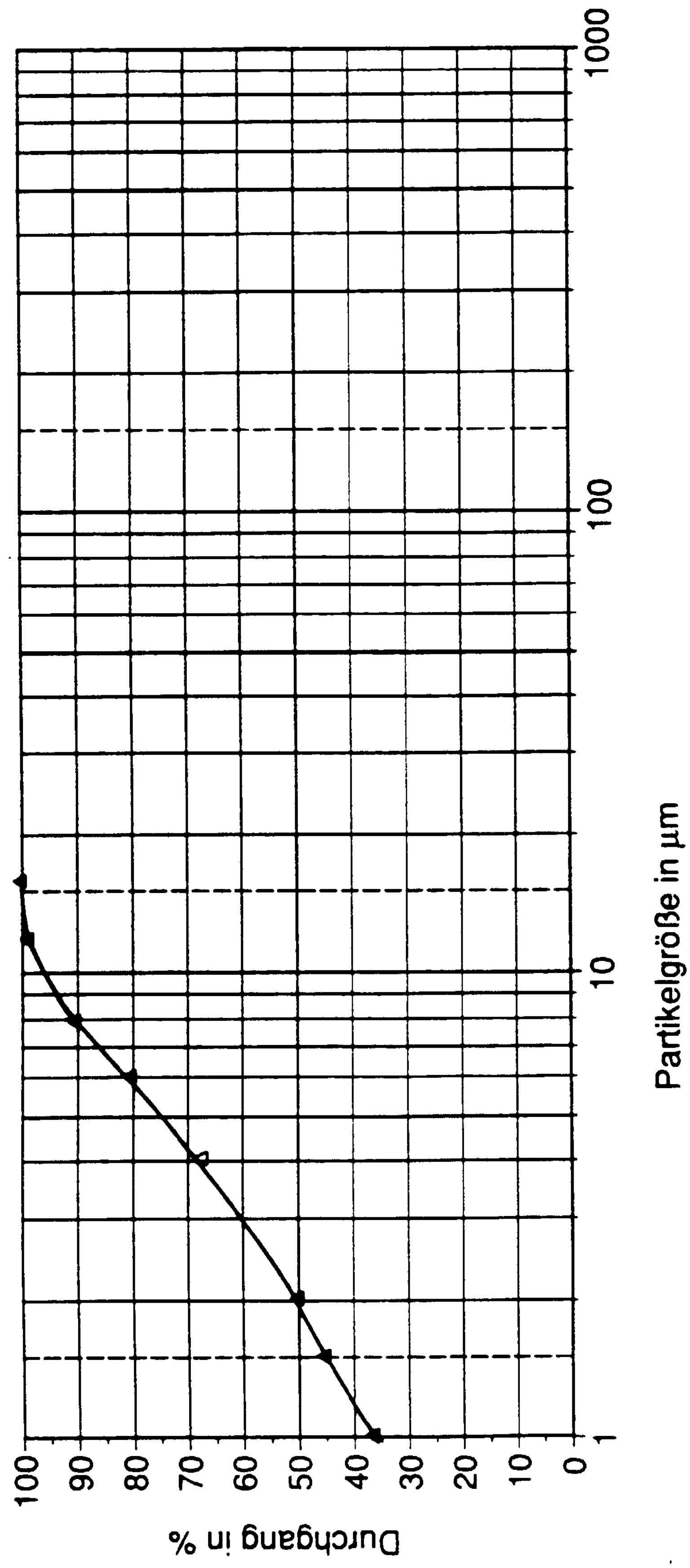

1
10
100
1000
Partikelgröße in µm
100
90
80
70
60
50
40
30
20
10
0
Durchgang in %

FIG.6

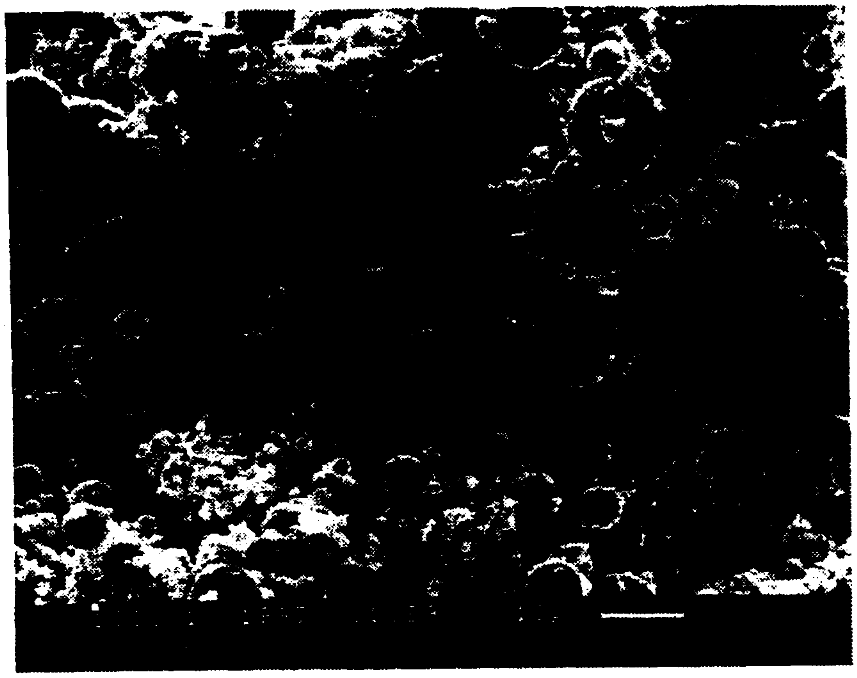

FIG.7